# EUROPEAN PATENT SPECIFICATION

(11) **EP 3 063 850 B1**
(45) Date of publication and mention of the grant of the patent: **05.07.2017**
(21) Application number: 14820756.6
(22) Date of filing: 23.10.2014
(51) Int. Cl.: H02H 3/087, H01H 9/54, H02M 1/32, H02H 7/125, H02M 7/00

(54) **BREAKER CIRCUIT**
SCHUTZSCHALTUNG
DISJONCTEUR

(30) Priority: 30.10.2013 GB 201319185
(43) Date of publication of application: 07.09.2016
(73) Proprietor: General Electric Technology GmbH, 5400 Baden (CH)
(72) Inventor: TRAINER, David Reginald, Derby Derbyshire DE24 0AQ (GB); JASIM, Omar Fadhel, Wollaton Nottingham NG8 2RW (GB)
(74) Representative: Cleary, Fidelma
(86) International application number: PCT/EP2014/072755
(87) International publication number: WO 2015/062970

(56) References cited:
- WO-A1-2011/157300
- WO-A1-2012/000545
- US-A1- 2013 208 521

## Description

This invention relates to a breaker circuit, and in particular but not exclusively to a breaker circuit for isolating high voltage equipment, for example High Voltage Direct Current (HVDC) equipment such as a converter from a power network, such as a direct current network.

There is often a need to isolate equipment or parts of a circuit, usually to protect apparatus from damage in the event of a fault. To that end, breaker switches are known. These are switches (which can be mechanical or solid state) which are operated, either automatically or following a signal, usually opening the circuit to prevent further current flow.

Particular problems exist with operating breaker switches in relatively high voltage environments. For example, in a mechanical switch, arcing can occur on opening, in which ionisation of the air between separating contacts allows the air to act as a conductor. This is potentially dangerous in itself and also causes significant wear to the equipment, which therefore requires regular review and renewal. Solid state switches do not suffer from arcing, but they are not generally able to handle the full voltage in a high voltage environment. This means that, where they are used, it is usual to provide several- possibly hundreds- in series, at which point the losses associated with their presence in the circuit become appreciable.

In order to address such problems, combinations of solid state and mechanical switches have been described. For example, WO2011/057675 in the name of ABB Technology AG describes a direct current (dc) breaker device in which non-linear resistors are connected in parallel to a bypass path made up of one or more solid state switches, and there is a further parallel connection to series connection of a mechanical switch and an 'auxiliary breaker', which is another solid state switch. On detection of a fault, the switches of the bypass path are closed, allowing current to flow and the auxiliary breaker is opened, so that the current is commutated to the bypass path. Following this, the mechanical switch is opened (the current having been diverted away from this switch to address the risk of arcing), followed by the switches of the bypass path and the current is directed to the resistors.

One use of such a breaker arrangement would be to isolate HVDC equipment, for example a high voltage converter, from an associated power network. In power transmission networks, alternating current (ac) power is typically converted to direct current (dc) power for transmission via overhead lines and/or under-sea cables. This conversion removes the need to compensate for ac capacitive load effects imposed by the transmission line or cable, and thereby reduces the cost per kilometer of the lines and/or cables. Conversion from ac to dc thus becomes cost-effective when power needs to be transmitted over a long distance. The conversion of ac power to dc power is also utilized in power transmission networks where it is necessary to interconnect the ac electrical networks operating at different frequencies. In any such power transmission network, converters are required at each interface between ac and dc power to effect the required conversion.

WO 2012/000545 A1 describes a HVDC converter station for interconnection of a DC transmission line and an AC system. The converter station comprises a protection system which monitors the temperature of a reverse-conducting component.

WO 2011/157300 A1 describes a power electronic converter for HVDC power transmission and reactive power compensation. The converter comprises a plurality of switching elements interconnecting a DC network and one or more AC networks, which are controllable to facilitate power conversion between AC and DC networks.

US 2013/208521 A1 describes a power electronic converter for HVDC power transmission and reactive power compensation. The converter has terminals to connect to a DC network and terminals to connect to an AC network and self-commutated switching elements which are controllable to inject a voltage to modify a DC voltage presented to the DC side of the converter or modify an AC voltage and current on the AC side of the converter.

According to one aspect of the present invention, there is provided a breaker circuit arranged to isolate a converter from a direct current network in the event of a fault condition comprising:
an isolation element arranged, on activation, to prevent current flow between the network and the converter;
an energy absorption element, capable of receiving energy remaining in the circuit following activation of the isolation element;
a commutating voltage source arranged to provide a source of commutating voltage to divert current away from the isolation element; and
a switchable isolation element bypass path arranged to the receive the diverted current;
wherein at least one of the energy absorption element, the commutating voltage source and the isolation element bypass path is operable in a non-fault condition to provide a functional component of the converter.

There are various advantages associated with this arrangement. First, the circuit makes use of at least one component which also has a use within a converter in general operation. As used herein, the term 'non-fault condition' shall be taken to include all states which do not require dc breaker operation. This could include a range of states from start-up, testing, normal operation and fault recovery states. Such fault and non-fault states may also be termed 'normal' and 'abnormal' operation. This means that breaker functionality can be provided along with the converter with reduced additional components. In addition, the provision of a bypass path allows operation of the isolation element at lower voltages (in preferred examples, the fault current is driven to, or close to, zero before the isolation element, which may be a simple mechanical switch, is activated). This reduces the risks and wear associated with operation of an isolation element.

Further, the term 'functional component' shall be taken to include any component which contributes to the function of the converter in converting current. Thus, simple conductors such as wires, and components which are not used during normal operation, such as a mechanical breaker switch or a solid state switch which remains in a given state during non-fault operation, thus acting as simple conductors, are not taken to be functional components as they do not contribute to the process of conversion of the current (albeit that they may provide a conduction path).

The bypass path may be in parallel with the commutating voltage source and the energy absorption element. This arrangement may be readily incorporated with known converters, and means that the switchable bypass path can provide a current path which is outside the normal converter current path, such that losses are not seen due to the switches within the switchable bypass path during non-fault operation. However, in an alternative arrangement, the bypass path could be provided as a short circuit between positive and negative dc terminals. Where the short circuit is between dc terminals, this allows ready integration of converter components into the breaker circuit.

The switchable bypass path may comprise one or a series of half-bridge or full-bridge chain link cells which are switchable into a bypass state. Such cells are a common component of converter circuits, in particular multilevel modular converters (MMC), so allows use of these components (for example, as used in an MMC to synthesise a voltage form in normal, i.e. non-fault condition, use of the converter) as part of the breaker circuit.

The commutation voltage source may be, in non-fault conditions, a filter, conveniently an active filter, which could be arranged as a dc filter of the converter, acting, in a non-fault condition, to remove harmonics and/or generally smooth the dc input/output. In one particular example, the commutation voltage source may comprise a series of half-bridge or full-bridge chain link cells each comprising a cell capacitor, wherein the chain link cells are controllable to insert their cell capacitors in series to form a direct voltage source. This arrangement is known for use as an active dc filter, so the commutating voltage source could fulfil that function in non-fault conditions.

While the energy absorption element could comprise one or more resistors, in other embodiments it alternatively or additionally comprises at least one capacitor. Such capacitors are common elements within converters. The inductive energy absorbed by such capacitor(s) in the event of a fault could be subsequently absorbed by resistors, or used in the functioning of circuit. In particular in some embodiments, it could subsequently be used to switch one or more switches, one or more of which could be a switch within the switchable bypass path. This is a useful way of dissipating or absorbing the energy.

In some examples, the converter is connected to an ac network via transformer windings. In such examples, and in order to prevent the current from the ac network also being diverted to the bypass path, an ac current bypass path could be created across the ac terminals of the transformer windings. This allows the current to be shared between more paths, which reduces the thermal rating required for the components on the switchable bypass path.

The circuit could comprise one or more dc voltage source(s) arranged to limit the commutating voltage, for example comprising chain link cells in a multilevel converter. The provision of a dc voltage source is particularly convenient when a fault does not completely collapse the dc network voltage. For example, a high impedance fault could leave a relative high fault current remaining in the circuit but a voltage source which could limit the commutating voltage would also reduce the rate at which the current rises, allowing the mechanical switch time to act before the current becomes too high.

The converter may be at least one of: (i) a modular multilevel converter (MMC), (ii) a Series Bridge Converter (SBC), (iii) a Controlled Transition Bridge (CTB). In some embodiments, the converter is an HVDC converter.

According to a second aspect of the invention, there is provided a converter operatively connected to an isolation element arranged, on activation, to prevent current flow between a dc network and the converter; wherein the converter comprises a controller arranged to operate the converter in non-fault condition and a fault condition, the converter comprising at least one component operable as a functional component of the converter under non-fault conditions which, in a fault condition, provides at least one of the following:
an energy absorption element, for receiving energy remaining in the circuit following activation of the isolation element;
a commutating voltage source, to provide a source of commutating voltage to divert current away from the isolation element;
a switchable isolation element bypass path to receive diverted current.

In particular, the converter may comprise at least one filter (e.g. a dc active filter), which is capable of acting as commutating voltage source in fault conditions. The converter may comprise one or more chain link cells (as, for example in an SBC or a MMC), which act in non-fault conditions to synthesise voltage forms, and which are capable of providing a bypass path, for example by being switched into a bypass state (i.e. effectively being 'crow barred'). Alternatively or additionally, such cells, in some examples, are capable of providing an energy absorption element through utilisation of internal capacitors and/or providing a dc voltage source arranged to limit the commutating voltage in the breaker circuit. The provision of a dc voltage source is particularly convenient when a fault does not completely collapse the dc network voltage. For example, a high impedance fault could leave a relative high fault current remaining in the circuit but the chain link cells could be operated as a 'partial crowbar' to still inject a voltage, which would limit the commutating voltage, and therefore the rate of current rise, allowing the mechanical switch time to act before the current becomes too high.

In some examples, the converter is arranged such that, following isolation from the dc network, it may remain connected to an ac network, and is capable of at least contributing to the reactive power needs of that network (e.g. fulfilling the operations of a static synchronous compensator (STATCOM) or the like). The controller may therefore be arranged to operate the converter as a reactive power compensator following isolation from the dc network.

Elements described in relation to the first aspect of the invention may be combined with the converter of the second aspect of the invention.

According to a further aspect, there is provided a method of controlling a converter, the method comprising providing a converter and a breaker circuit comprising an isolation element, wherein the method further comprises isolating the converter from a dc network by causing the converter to change from a non-fault condition to a fault condition, diverting current from the isolation element and activating the isolation element, wherein the step of changing from a non-fault condition to a fault condition comprises causing at least one functional component of the converter to perform at least one of the following functions:
(i) provide a commutating voltage to divert current away from the isolation element;
(ii) provide an isolation element bypass path arranged to receive diverted current;
(iii) absorb energy remaining in the circuit following activation of the isolation element.

Therefore, the breaker circuit and the converter may comprise at least one common component. The method may comprise providing a commutating voltage substantially simultaneously with providing a isolation element bypass path and/or activating the isolation element to isolate the converter from the dc network after the formation of the bypass path and the provision of the commutating voltage diverting the current along that path has driven the current in the isolation element at least substantially to zero.

The method may further comprise causing at least one capacitor of the converter to absorb inductive energy remaining the circuit following activation of the isolation element in a fault condition, and further using the inductive energy thereby stored to operate switches within the converter and/or the breaker circuitry. This is a useful method of dissipating or absorbing the energy in the circuit.

In particular embodiments, there may be a connection to an ac network and, following isolation from the dc network, the method of controlling the converter may comprise operating the converter to provide reactive power compensation within the ac network.

The method may also comprise the use of any of the apparatus features described in relation to the first and second aspects of the invention above.

Preferred embodiments of the invention will now be described, by way of non-limiting examples only, with reference to the accompanying drawings in which:
**Figures 1** **A and 1 B** show, in schematic form, a prior art breaker;
**Figure 2** shows, in schematic form, an HVDC converter in use;
**Figures 3-5** shows converter arrangements according to embodiments of the present invention;
**Figures 6A and 6B** show sub-converters for use in the converter of Figure 5; and
**Figures 7-9** show current flow in use of the converter arrangement shown in Figure 5.

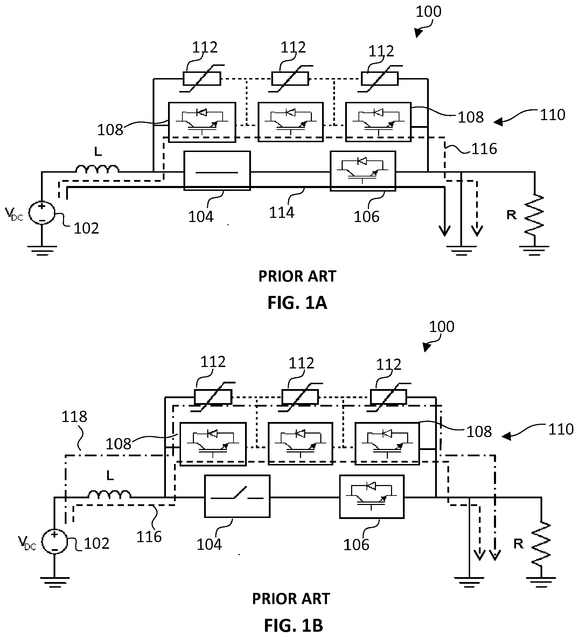

A prior art breaker 100 is shown in Figures 1A and 1B. This breaker 100, which functions for example as described in WO2011/057675, is arranged in this example to isolate a dc voltage source 102 from a network in the event of a fault.

The breaker 100 comprises a mechanical switch 104 connected in series with an auxiliary breaker 106, which in this example is an IGBT switch. This series connection is in parallel connection with a bank of switches 108, which provide a switchable bypass path 110. Further, also in a parallel connection to the bypass path 110 and to the series connection of the mechanical switch 104 and the auxiliary breaker 106, is a bank of non-linear resistors 112, which act as surge arrestors.

In non-fault operation, the current follows the solid line path 114 shown in Figure 1A through the mechanical switch 104 and the auxiliary breaker 106. In the event of a fault, the auxiliary breaker 106 is switched off, resulting in a build up of impedance and thereafter a commutating voltage which causes the current to follow the dotted line 116 also shown in Figure 1A along the bypass path 110 (the switches 108 of which should be closed to allow current to flow). With the current diverted, the mechanical switch 104 may be opened without risk of arcing, as shown in Figure 1B. Next, a signal is sent to open the bypass path 110 (i.e. open each of the switches 108 therein), such that the current is diverted to the non-linear resistors 112, where the energy may be safely absorbed, i.e. following the dot-dash line 118 in Figure 1B.

Conceptually, the breaker 100 may be thought as to comprise an isolation element (the mechanical switch 104), a source of a commutating voltage (the auxiliary breaker 106), a switchable isolation element bypass path (the bypass path 110) and an energy absorption element (the non-linear resistors 112).

A notable feature is that the switches 108 of the bypass path 110 are not in the circuit until a fault occurs, so the losses associated with having a series of solid state switches in the circuit in normal use are not seen and, as they are not stressed during normal operation, they can be expected to last longer. It is also noted that, while the bypass path 110 must be rated for the full voltage of the system, the auxiliary breaker 106 need not be.

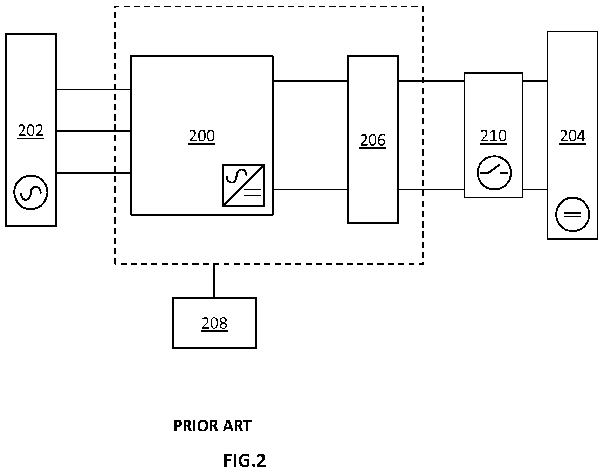

Figure 2 shows a conceptual view of an ac/dc converter for use in HVDC, comprising a high voltage converter 200 arranged between an ac source 202 and a dc network 204. The converter 200 may have any known design, and comprises an active dc filter 206 arranged between the converter 200 and the network 204 to smooth the dc output. In this example, the active dc filter 206 is arranged to remove harmonics from the output of the converter 200 prior to injection into the dc network 204. The converter 200 and the filter 206 are under the control of a controller 208, which is capable of controlling the various functions thereof, such as switching times, filtering, responding to network conditions, performing start-up and check functions, etc. A breaker circuit 210, for example having the form of the breaker 100 described above is provided to isolate the HVDC equipment from the dc network 204.

In high voltage environments, the filter 206 required can be very large. However, use of more modern designs, such as IGBT based Voltage Source Converters (VSCs), which are generally replacing thyristor based Current Source Converters (CSCs) as the technology of choice, have allowed the filters 206 to be considerably reduced in size, or indeed removed the requirement for them all together. VSCs are attractive for other reasons, such as allowing full independent control of active and reactive power. This means that they can active assist the reactive power requirements of an ac network, for example fulfilling the operations of a static synchronous compensator (STATCOM). Modular Multilevel Converters (MMC) are a class of VSC which, due to their harmonic performance and relative ease of timing control, are the subject of much ongoing research and development.

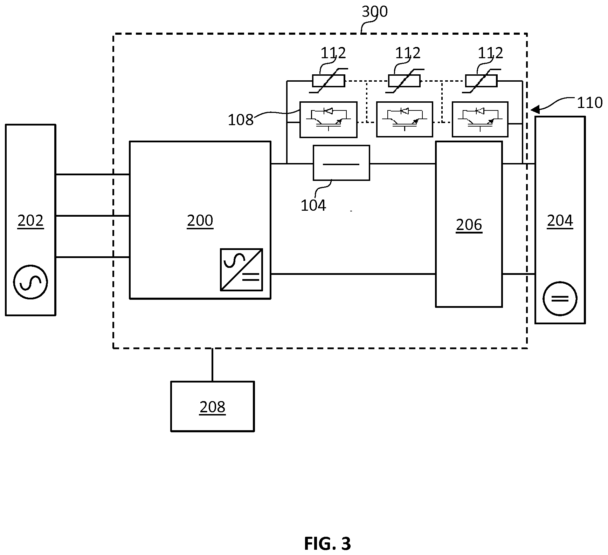

A VSC according to one embodiment of the present invention incorporating breaker circuitry is shown in Figure 3. Specifically, Figure 3 shows a breaker VSC 300 comprising a converter 200 and a filter 206 as set out above. Although the filter 206 is configured to act to smooth the output to the dc network in 'normal', non-fault condition, it is also configured to act as the commutating voltage source of a breaker circuit as described in relation to Figure 1 in the event of a fault.

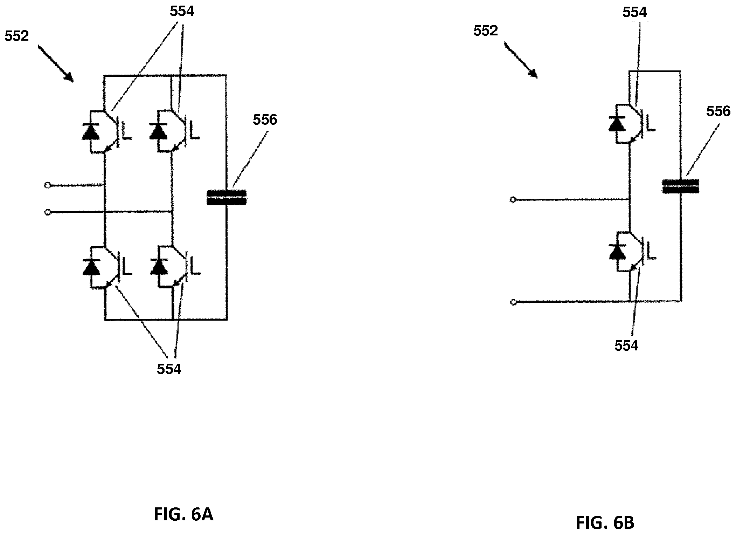

As mentioned above, the controller 208 is capable of controlling the filter 206. In this example, the filter 206 is a multi-level converter comprising a series string of full-bridge chain link cells (for example as shown in Figure 6A) each including at least one cell capacitor which operate in a non-fault condition to smooth the output by controlling the converter's voltage phase, usually to remove harmonics. Such filters will be familiar to the skilled person. A series of half-bridge chain link cells (for example as shown in Figure 6B) could also provide a filter 206. Indeed, in the case of a single-phase harmonic voltage source, any single phase VSC capable of producing harmonic voltages could function as the filter 206. This includes H-bridge type pulse width modulation (PWM) circuits and multilevel converters (commonly, neutral point clamped and 'flying capacitor' multilevel circuits).

Upon a signal from the controller 208, the filter 206 can enter a fault mode, and, instead of performing filtering as in the non-fault mode, the cell capacitors (for example as shown in Figure 6A) are inserted in series to form a direct voltage source, thus acting as a source of a commutation voltage. This diverts the current to the bypass path 110, the switches of which are controlled to be closed. With the current diverted, the mechanical switch 104 may be opened without risk of arcing. Next, a signal is sent to open the bypass path 110 (i.e. open each of the switches 108 therein), such that the current is diverted to the non-linear resistors 112, where the energy may be safely absorbed.

There are various advantages associated with this arrangement. First, the circuit makes use of a component (the filter 206) which may commonly be found in High voltage converters, such as converters for use in HVDC. Therefore breaker functions can be added with reduced additional components, resulting in improvements in cost, weight and size. Second, it has all the advantages associated with the breaker described in relation to Figure 1, notably that the power electronic components of the bypass path 110 are usually outside the main circuit and therefore do not consume power, resulting in efficient operation. It has a further advantage in that the converter 200 may stay connected to the ac network, thus may continue to respond to the reactive power needs of that network 202. Further, because there are fewer components required in the overall VSC and dc breaker system, reliability will be improved over apparatus in which each of these is provided separately.

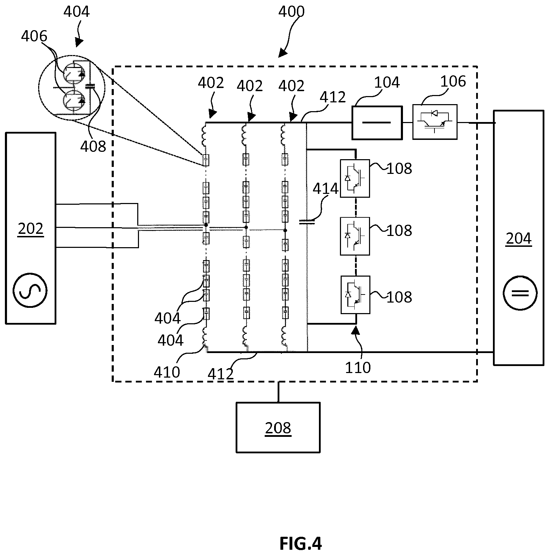

A further embodiment of the present invention is now described in relation to Figure 4. Figure 4 a multilevel converter 400. The multilevel converter 400 includes respective converter bridges 402 of series-connected converter cells 404 (only some of which are labelled for the sake of clarity). As shown by a close-up view, each converter cell 404 includes a pair of series-connected IGBTs 406 connected in parallel with a capacitor 408, and are switched to provide small steps in the converter voltage, as will be familiar to the skilled person.

The capacitor 408 of each cell 404 is configured to have a sufficiently high capacitive value in order to constrain the voltage variation at the capacitor terminals. A dc side reactor 410 is also provided in each converter bridge 402 to limit transient current flow between converter limbs 412 and thereby enable the parallel connection and operation of the converter limbs 412. Also provided is a dc link capacitor 414, which operates in normal, non-fault, use to smooth the dc voltage.

The voltage source converter 400 further includes a bank of uni-directional switches 108 to provide a switchable bypass path 110 as described above. The bypass path 110 is connected in parallel with the dc link capacitor 414 and is normally switched to be out of the circuit, i.e. it does not perform any function in non-fault use of the converter 400, and therefore does not result in losses during normal use. It will also be noted that, in this embodiment, no filter 206 is provided. In some converters, in particular if the harmonic performance of the converter is sufficiently good, a filter is not required. A commutating voltage source is provided in the form of an IGBT auxiliary breaker 106, although any switch which, on operation, results in a build up of impedance and therefore a commutation voltage could be used. An IGBT provides a suitable switch and does not create unacceptable losses throughout non-fault operation. However, it will also be noted that the IGBT does not actually contribute to the non-fault steady state functioning of the voltage source converter 400, as it is not operated in normal use.

In the event of a fault, the controller 208 sends a signal to cause the auxiliary breaker 106 to open, causing a commutating voltage. At the same time, the controller 208 sends a signal to cause the switches 108 in the bypass path 110 to close, allowing the commutated current to flow through the bypass path 110. This allows the mechanical switch 104 to be opened under low or zero current, following which the bypass path 110 switches can also be opened, diverting the current to the capacitor 414. Therefore, when the converter 400 is in a fault mode which requires operation of the breaker, the capacitor 414 is not longer operating as in the non-fault state as a functional component of the converter 400 (in particular to smooth the dc voltage) but instead is fulfilling the function of an energy absorption element in a breaker circuit. The energy stored in the capacitor 414 can be used to control the switches 108, thus being usefully dissipated, although in other examples, it could be discharged in a resistor or used in operation of the converter 400 as a STATCOM as mentioned below. It will also be noted that, once the fault is removed, the capacitor 414 charges and becomes a dc voltage source, as is required for the converter to operate as a STATCOM.

It will be noted that in this case, the auxiliary breaker 106 should be configured to tolerate a relatively high discharge current from the dc capacitor 414 and the switches 108 operated in the presence of a discharged dc capacitor (or again rated for the high discharge current).

This has the advantages associated with the embodiment of Figure 3, although it does not require a filter as the source of the commutating voltage. It utilises an energy absorption element which is already part of the voltage source converter, specifically the dc link capacitor 414. It will be noted that the isolation bypass path 110 is parallel to the fault path, and provides a path for energy which bypasses the switch 104 via the connection to the negative rail of the dc network. Of course, the commutating voltage could be provided by a filter 206, in particular if one was required in any event for the functioning of the converter 400.

Although in this example, a dedicated bypass path is provided, it can be seen that any circuit element which is in parallel with the dc fault path could be used to provide this path (although preferably the components on that path would be bypassed to protect them). For example therefore, in a related embodiment, on detection of a fault, and at the same time as the auxiliary breaker 106 supplies the commutating voltage, the cells 404 could be controlled to form the bypass path by closing the switches 406 thereof (removing the need for a dedicated bypass path 110 and the switches 108 thereof). In practice, reactors 410 are small and, in such an embodiment, the commutation voltage from the auxiliary breaker 106 would act against the loop inductance including that presented by the reactors 410 and stray inductance in the circuit up to the fault location. Similarly, the cell capacitors 408 could be used to absorb some (or all) of the inductive energy released when the crow-bar (i.e. the bypass provided by the closed switches 406 of the bridges 402) is removed and the current reduces to normal levels (or zero). As will be familiar to the skilled person, the energy E is related to the inductance L and the current I by the relationship E = 0.5 LI².

Thus, the bridges 402 could first provide the bypass path and then, through use of the capacitors 408 in the cells 404 therein, energy absorption elements.

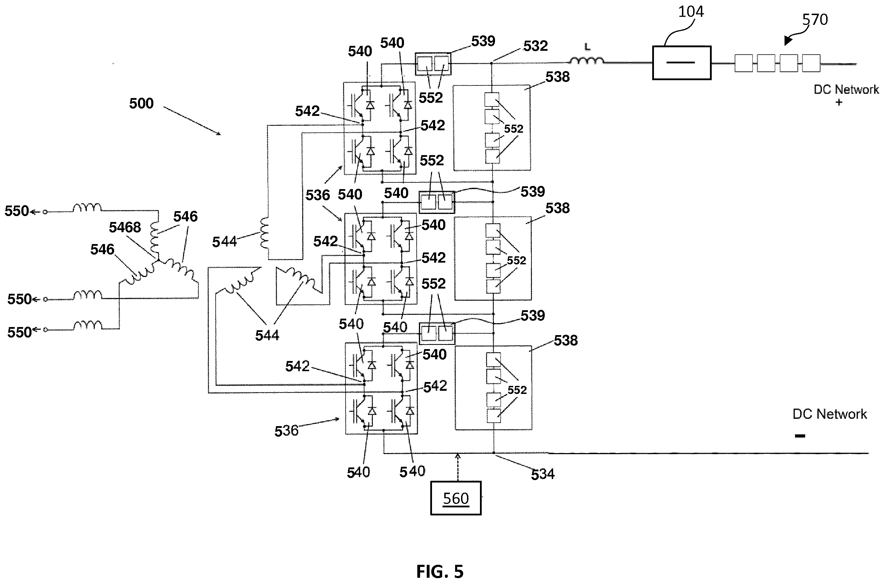

Figure 5 shows a further embodiment of a voltage source converter 500.

The voltage source converter 500 of Figure 5 comprises first and second dc terminals 532,534, a plurality of phase elements 536, a plurality of auxiliary sub-converters 538, and a plurality of tertiary sub-converters 539.

Each phase element 536 includes two parallel-connected pairs of series-connected switching elements 540. A junction between each pair of series-connected switching elements 540 defines an ac terminal. The ac terminals of each phase element 536 define the ac side 542 of that phase element 536.

In use, the ac terminals of each phase element 536 are interconnected by a respective one of a plurality of open secondary transformer windings 544. Each secondary transformer winding 544 is mutually coupled with a respective one of a plurality of primary transformer windings 546. The plurality of primary transformer windings 546 are connected in a star configuration in which a first end of each primary transformer winding 546 is connected to a common junction 548 and a second end of each primary transformer winding 546 is connected to a respective phase of a three-phase ac electrical network 550. In this manner, in use, the ac side 542 of each phase element 536 is connected to a respective phase of a three-phase ac electrical network 550.

The common junction 548 defines a neutral point of the plurality of primary transformer windings 546, and is grounded (not shown).

Each phase element 536 is connected in series with a respective one of the plurality of tertiary sub-converters 539 to define an electrical block. Each auxiliary sub-converter 538 is connected in parallel with a respective one of the electrical blocks to form a limb.

Each sub-converter 538,539 includes a plurality of cells, or modules 552.

As shown in Figures 6A and 6B each module 552 of each sub-converter 538, 539 is a cell comprising switching elements 554 and an energy storage device 556 in the form of a capacitor.

Referring to Figure 6A, each module 552 of each tertiary sub-converter 539 is a cell comprising two pairs of switching elements 554 and an energy storage device 556 in the form of a capacitor. In each tertiary sub-converter 539, the pairs of switching elements 554 are connected in parallel with the capacitor 556 in a full-bridge arrangement to define a 4-quadrant bipolar module that can provide negative, zero or positive voltage and can conduct current in two directions.

Referring to Figure 6B, in each auxiliary sub-converter 538, a pair of switching elements 554 is connected in parallel with the capacitor 556 in a half-bridge arrangement to define a 2-quadrant unipolar module that can provide zero or positive voltage and can conduct current in two directions.

The plurality of limbs is connected in series between the first and second dc terminals 532,534. In use, the first and second dc terminals 532,534 are respectively connected to first and second terminals of a dc electrical network, the first terminal of the dc electrical network carrying a positive dc voltage, the second terminal of the dc electrical network carrying a negative dc voltage.

The configuration of each limb as set out above means that, in use, a dc voltage appears across the parallel-connected pairs of series-connected switching elements 540 of each phase element 536.

As such, in use, each phase element 536 interconnects a dc voltage and an ac voltage. In other embodiments, it is envisaged that each phase element 536 may include a plurality of switching elements with a different configuration to interconnect a dc voltage and an ac voltage.

Each switching element 540,554 includes a one or more switching device. Each switching element 540,554 further includes a passive current check element that is connected in anti-parallel with each switching device.

In this example, each switching device is in the form of an insulated gate bipolar transistor (IGBT). It is envisaged that, in other embodiments of the invention, some or each IGBT may be replaced by a gate turn-off thyristor, a field effect transistor, an injection-enhanced gate transistor, an integrated gate commutated thyristor or any other self-commutated switching device. The number of switching devices in each switching element may vary depending on the required voltage rating of that switching element 540, 554. As will be appreciated by the skilled person, in practice, switching element 540 will likely be made up of series strings of insulated gate bipolar transistors (IGBTs) or integrated gate commutated thyristor (IGCTs).

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

It is further envisaged that, in other embodiments of the invention, some or each capacitor may be replaced by another type of energy storage device that is capable of storing and releasing energy, e.g. a fuel cell or battery.

The plurality of series-connected modules 552 in each sub-converter 538,539 defines a chain-link converter.

The capacitor 556 of each module 552 is selectively bypassed or inserted into the chain-link converter by changing the states of the switching elements 554. This selectively directs current through the capacitor 556 or causes current to bypass the capacitor 556 so that the module 552 provides a zero or positive voltage in the case of each auxiliary sub-converter 538, and the module 552 provides a negative, zero or positive voltage in the case of each tertiary sub-converter 539.

The capacitor 556 of a module 552 is bypassed when the switching elements 554 in the module 552 are configured to form a short circuit in the module 552. This causes current in the chain-link converter to pass through the short circuit and bypass the capacitor 556, and so the module 552 provides a zero voltage, i.e. the module 552 is configured in a bypassed mode.

The capacitor 556 of the module 552 is inserted into the chain-link converter when the switching elements 554 in the module 552 are configured to allow the current in the chain-link converter to flow into and out of the capacitor 556. The capacitor 556 then charges or discharges its stored energy so as to provide a non-zero voltage, i.e. the module 552 is configured in a non-bypassed mode.

It is envisaged that, in other embodiments of the invention, each module 552 may be replaced by another type of module that includes at least one switching element and at least one energy storage device, the or each switching element and the or each energy storage device in the or each module combining to selectively provide a voltage source.

The structure of the chain-link converter permits build up of a combined voltage across the chain-link converter, which is higher than the voltage available from each of its individual modules 552, via the insertion of the energy storage devices 556 of multiple modules 552, each providing its own voltage, into the chain-link converter. In this manner switching of each switching element 554 in each module 552 causes the chain-link converter to provide a stepped variable voltage source, which permits the generation of a voltage waveform across the chain-link converter using a step-wise approximation. As such each chain-link converter is capable of providing a wide range of complex voltage waveforms.

The parallel connection of the auxiliary sub-converter 538 and electrical block in each limb permits the auxiliary sub-converter 538 to selectively act as a waveform synthesizer to modify a first dc voltage that is presented to the dc electrical network.

The series connection of the tertiary sub-converter 539 and phase element 536 in each limb permits the tertiary sub-converter 539 to selectively act as a waveform synthesizer to modify a second dc voltage at a dc side of the corresponding phase element 536. Such modification of the dc voltage at the dc side of the corresponding phase element 536 results in a corresponding modification of the ac voltage at the ac side 542 of the corresponding phase element 536.

It is envisaged that, in other embodiments of the invention, the configuration of each auxiliary sub-converter 538 may vary as long as each auxiliary sub-converter 538 is capable of selectively acting as a waveform synthesizer to modify the first dc voltage, and the configuration of each tertiary sub-converter 539 may vary as long as each tertiary sub-converter is capable of selectively acting as a waveform synthesizer to modify the second dc voltage. For example, each auxiliary sub-converter 538 may be a multilevel converter.

The voltage source converter 500 further includes a controller 560 configured to control all the functions thereof. The voltage source converter 500 further comprises a dc filter 570 which in this example is an active filter arranged, in non-fault steady state operation of the converter 500, to filter out harmonics of the voltage prior to injection into the dc network, comprising a series full bridge cell converter. As the skilled person will be aware, such a dc filter 570 is a relatively common component in a converter station to reduce the harmonics injected into the dc line. Such harmonics can cause undesired resonance effects and can even cause interference in nearby telephone lines. The design of the filter depends on the anticipated harmonic voltages which are characteristic of the converter 500.

In the example embodiment, the filter 570 is arranged to filter the 6^{th}, 12^{th} and 18^{th} harmonics of the voltage, as these are likely to remain after combination of the phases of the dc voltage. Further, the filter 570 forms part of a breaker circuit, providing a source of commutating voltage, and is arranged in series with a mechanical switch 104.

Although the present invention for the most part concerns operation in fault conditions, a brief explanation of the steady state working of the converter 500 is now provided. The controller 560 is arranged to selectively control each of the tertiary 539 or auxiliary 538 sub-converters for example to synthesise harmonics to reduce the need for filtering, or to regulate the energy level within each sub-converter 538, 539. This can be achieved by controlling the sub-converters to synthesise voltage waveforms with given harmonic components and/or controlling the phase of a voltage component relative to a current component. It may also allow generation of a compensatory dc voltage component for presentation to the dc side of the respective phase element 536 so as to compensate for a change in the respective second dc voltage caused by the change in real power and/or reactive power generated or absorbed at an ac side of the respective phase element 536 and thereby inhibit the change in the respective second dc voltage from modifying the respective first dc voltage.

Thus, any effect a change in reactive power generated or absorbed at an ac side of the respective phase element 536 might have on the respective first dc voltage is inhibited, permitting operation of the voltage source converter over a wide range of real power and reactive power conditions with little to zero detrimental effect on the operation of the dc side of the voltage source converter. A change in real power and/or reactive power generated or absorbed at an ac side could also be addressed by controlling each auxiliary sub-converter 538 to synthesize one or more zero-phase sequence triplen harmonic components (e.g. 3^{rd}, 9^{th} and 15^{th} harmonic components).

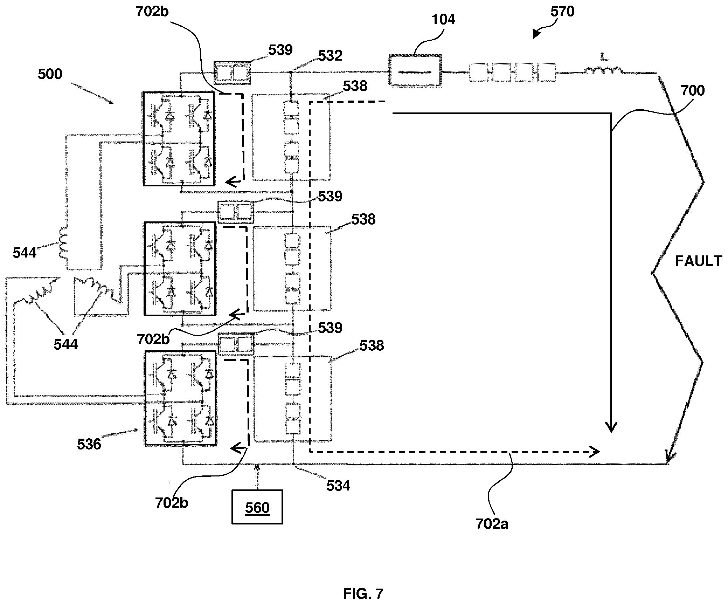

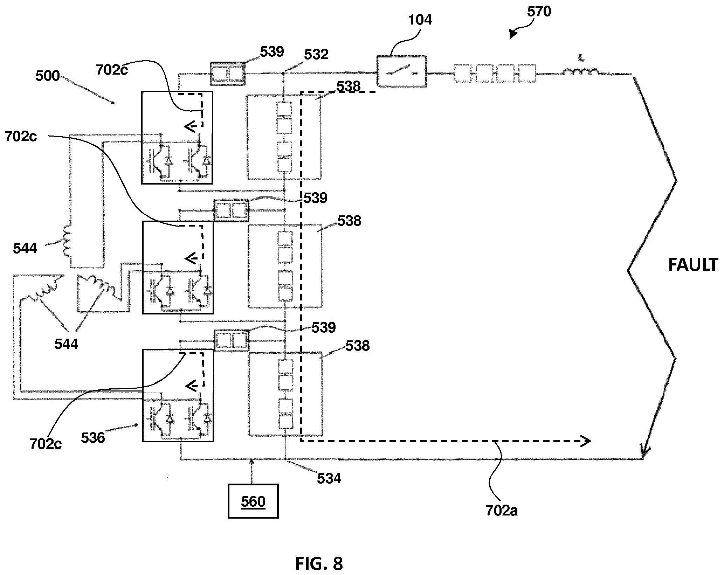

Thus it can be seen that the voltage source converter 500 of Figure 5 is highly versatile, and can provide reactive power compensation as well as active filtering. Moreover, the use of the voltage source converter 500 as part of a breaker circuit configuration is now described with particular reference to Figures 7 and 8.

First, when the fault occurs, the current follows the path 700 shown in Figure 7. The filter 570 is controlled by the controller 560 to operate in a fault mode, in which it provides a commutating voltage. This may be achieved by switching the capacitors contained in the cells thereof into series connection. Further, the auxiliary sub-converters 538 and tertiary sub-converters 539 are also operated in a fault mode, in which they are switched to their bypass state, effectively being short circuited, or creating a 'crow bar' across these cells, providing a bypass path 702a for the isolation element (i.e. the mechanical switch 104). Note, as there is still a connection to the ac network, there is also a current flow 702b through the phase elements 536 to the crow barred sub-converters 538, 539.

Once the mechanical switch 104 is opened, the fault current flows between the ac network and a crow-bar created by the bypassed auxiliary sub converters 538.

Therefore, in this example, the filter 570 provides, in the event of a fault, a commutating voltage which diverts current from the mechanical switch 104 via a newly formed bypass path comprising the crow barred auxiliary sub-converters 538. The isolation element provided by the mechanical switch 104 may then can then be opened without risk of arcing (i.e. the commutating voltage drives the loop current in fault path to zero even in the presence of inductance in the connection between the voltage source converter 500, the mechanical breaker 104 and the fault, following path 702a).

The crow-bar short circuit may then be removed by switching off the appropriate IGBT switches 554 with inductive energy diverted and absorbed by the capacitors 556 within the modules 552. Thus, the sub-converters 538, 539 continue to operate in a fault mode to provide a further element of a breaker circuit: the energy absorption element. The converter 500 remains connected to the ac network and operational, for example as a STATCOM, capable of exchanging reactive power with the ac network as required.

In an alternative method, shown in Figure 8, another crow-bar short circuit can be achieved by switching on two adjacent switches in the phase elements 536, which diverts current from the modules 552 of the sub-convertors 538, 539 onto path 702c by providing a short circuit across the ac terminals of the secondary transformer windings 544, providing an ac current bypass path, or ac crowbar. This can be advantageous, in particular if the switches in the phase elements 536 are designed to have a higher thermal rating compared to those in the modules 552. If both crow-bar short circuits are put in place at one time, the current load is effectively shared between the auxiliary sub-modules 538 and the phase elements 536. Both the ac and dc crowbars may then be removed once the switch 104 is opened, allowing the voltage source converter 500 to assist the ac network with its reactive power needs. Operation of the converter 500 to assist the ac network in this way will be familiar to the skilled person and can be achieved using suitable known control methods.

The above methods of short circuiting the dc network using elements of the converter 500 are particularly suited to acting in the event of a fault leading to complete collapse of dc network voltage (i.e. a low impedance fault). In the event of a high impedance fault, significant residual dc network voltage may remain and there could be a high, and potentially damaging, fault current delivered to the circuitry by the dc network. While a residual voltage can in effect provide a source of a commutating voltage if the converter 500 is fully crow-barred, this voltage is uncontrolled and may be too high to allow safe operation of the converter and/or the breaker circuit. Therefore, it may be desirable to back off at least a portion of the dc network voltage.

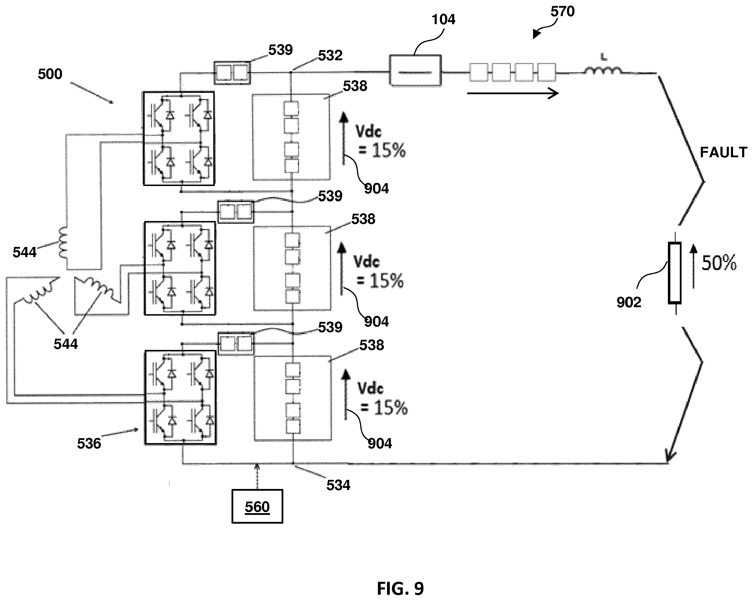

This situation is represented in Figure 9, where the high impendence fault 902 is seen by the converter 500 as a resistor (although it will of course be appreciated that this is not an actual electrical component). In this example, the residual dc voltage is 50% of the voltage during normal operation. In this case, the auxiliary sub-converters 538 may be operated in a partial crow-bar fashion and still inject a finite voltage 904 to limit the total commutating voltage around the loop (in the example of Figure 9, this is 15%, but this should be chosen according to the circuit and the fault encountered). This limits the rate of rise of current over the period required to open the mechanical switch (for example, 100-200ms for a conventional switch). In such an example, a separate commutating voltage source is not required (and therefore the filter 570, may be fully bypassed during the current diversion and interruption phases) as the commutating voltage is the difference between the residual dc network voltage and that provided by the auxiliary sub-converters 538. In this example, therefore, the source of the commutating voltage is the connection to the dc network and the auxiliary sub-converters 538 (or at least those elements thereof which remain in the circuit).

Therefore, in this example, the converter 500 forms a partial crow-bar (i.e. injects a finite voltage) to assist the dc breaker circuitry. To this end, the auxiliary sub-converters 538 act as dc voltage sources and limit the commutating voltage during breaker operation, and in this example are provided within the bypass path. In order to form this 'partial bypass' some (likely the majority) of cells in the auxiliary sub converters 538, will be bypassed, but some will have their cell capacitors inserted into the circuit to inject the relatively low voltage required to back-off the residual dc network voltage.

In this embodiment, use is made of the half-bridge cells of the parallel auxiliary sub-converters 538 (rather than, say, the series connected cells of the filter 570) because the injected voltage will usefully also act to reduce the current fed from the ac network. However, the cells of the filter 570 could alternatively or additionally contribute to providing this back-off voltage.

The chain link cells provided by the auxiliary sub converters 538 can therefore provide a flexible short circuit crow-bar in response to a low impedance dc network fault. They can be controlled to provide a variable finite voltage to respond to any dc network fault that results in a residual dc network voltage (this might be, for example, 20%, 50%, 70% or indeed any other percentage). Although a particular arrangement has been shown herein, this type of stepped voltage output could also be provided from other multilevel converter types (e.g. other chain link arrangements, neutral point clamped arrangements, flying capacitor arrangements).

After the isolation element 104 has been opened and the fault isolated, the converter could be operated as set out above, with the auxiliary sub-converters 538 providing energy absorption elements. Further, the converter may be operated as a STATCOM or the like.

Although various embodiments have been described herein, alternatives to these embodiments may be apparent to the skilled person. First, the embodiments have been described in relation to a high voltage environment as this is the context in which certain problems addressed by the invention are mostly likely to occur. However, in principle, the invention could be used in other networks, including but not limited to medium voltage and ultra high voltage. Further, although a mechanical switch has been described as the isolation element due to its low power consumption in normal use, in fact, any switch capable to isolating the dc connection could be provided, including solid state switches. While certain configurations of converters, including specific examples of multilevel modular converters have been described, the invention could be applied to other designs, including without limitation, to other designs of converter of voltage sourced or current sourced types and hybrids thereof including multilevel designs and designs employing pulse width modulation (PWM) switching control methods, etc.

## Claims

1. A breaker circuit arranged to isolate a converter (300; 400; 500) from a direct current (dc) network (204) in the event of a fault condition, the breaker circuit comprising:
i. an isolation element (104) arranged, on activation, to prevent current flow between the dc network (204) and the converter (300; 400; 500);
ii. an energy absorption element (112, 414, 556), capable of receiving energy remaining in the circuit following activation of the isolation element (104);
iii. a commutating voltage source (106; 206; 570), arranged to provide a source of commutating voltage to divert current away from the isolation element (104); and
iv. a switchable isolation element bypass path (110) arranged to the receive the diverted current; the circuit breaker is **characterised in that** at least one of the energy absorption element (112; 414; 556), the commutating voltage source (106; 206; 570) and the isolation element bypass path (110) is operable in a non-fault condition to provide a functional component of the converter.

2. A breaker circuit according to claim 1 wherein the bypass path (110) is
(i) in parallel with the commutating voltage source (106; 206; 570) and the energy absorption element (112, 414, 556); or
(ii) a short circuit between positive and negative dc terminals of the dc network (204);
and/or the switchable bypass path (110) comprises one or a series of half-bridge or full-bridge chain link cells which are switchable into a bypass state.

3. A breaker circuit according to any preceding claim wherein the commutating voltage source (106; 206; 570):
(i) is arranged to act as a filter of the converter (300; 400; 500) in a non-fault condition; and/or
(ii) comprises a series of half-bridge or full-bridge chain link cells each comprising a cell capacitor (408), wherein the chain link cells are controllable to insert their cell capacitors (408) in series to form a direct voltage source.

4. A breaker circuit converter according to any preceding claim wherein the energy absorption element (112; 414; 556) comprises at least one capacitor (408).

5. A breaker circuit according to claim 4 in which inductive energy absorbed by the capacitor(s) (408) in the event of a fault is used to switch one or more switches and, optionally at least one such switch is a switch within the switchable bypass path (110).

6. A breaker circuit according to any preceding claim in which the converter (300; 400; 500) is at least one of: (i) a modular multilevel converter (MMC), (ii) a Series Bridge Converter (SBC), (iii) a Controlled Transition Bridge (CTB); and/or the breaker circuit comprises at least one dc voltage source arranged to limit a commutating voltage in the breaker circuit.

7. A converter (300; 400; 500) operatively connected to an isolation element (104) arranged, on activation, to prevent current flow between a dc network (204) and the converter (300; 400; 500); wherein the converter (300; 400; 500) is **characterised in that** it comprises a controller (208; 560) arranged to operate the converter (300; 400; 500) in a non-fault condition and in a fault condition, the converter (300; 400; 500) comprising at least one component operable as a functional component of the converter (300; 400; 500) under non-fault conditions which, in a fault condition, provides at least one of the following:
i. an energy absorption element (112; 414; 556), for receiving energy remaining in the circuit following activation of the isolation element (104);
ii. a commutating voltage source (106; 206; 570) to provide a source of commutating voltage to divert current away from the isolation element (104);
iii. a switchable isolation element bypass path (110) to receive diverted current.

8. A converter according to claim 7 which comprises at least one filter, which is controllable by the controller to provide a commutating voltage source in a fault condition.

9. A converter (300; 400; 500) according to claim 7 or 8 which comprises one or more series of chain link cells which act in a non-fault condition to synthesise voltage waveforms, and which are controllable by the controller (208) to provide at least one of:
i. the bypass path (110),
ii. the energy absorption element (112; 414; 556) through utilisation of capacitors internal to the cells;
iii. a dc voltage source arranged to limit a commutating voltage.

10. A converter (300; 400; 500) according to any of claims 7 to 9 which is arranged, in operation, to connect to an ac network and is further arranged, following isolation from the dc network (204), to remain connected to the ac network, and the controller is capable of controlling the converter (300; 400; 500) to contribute to the reactive power needs of the ac network.

11. A converter (300; 400; 500) according to any of claims 7 to 10 which comprises transformer windings (546) providing a connection to an alternating current (ac) network via ac terminals and in which the converter is further arranged, in the event of a fault, to create an ac current bypass path across the ac terminals of the transformer windings.

12. A method of controlling a converter (300; 400; 500), the method comprising providing a converter (300; 400; 500) and a breaker circuit comprising an isolation element (104), wherein the method is **characterised in that** it comprises isolating the converter (300; 400; 500) from a dc network (204), by causing the converter (300; 400; 500) to change from operating in a non-fault condition to a fault condition, diverting current from the isolation element and activating the isolation element (104), wherein the step of changing from a non-fault condition to a fault condition comprises causing at least one functional component of the converter (300; 400; 500) to perform at least one of the following functions:
i. provide a commutating voltage to divert current away from the isolation element (104);
ii. provide an isolation element bypass path (110) arranged to receive diverted current;
iii. absorb energy remaining in the converter circuitry following activation of the isolation element (104).

13. A method according to claim 12 which comprises providing a commutating voltage substantially simultaneously with providing an isolation element bypass path (110) and, optionally,
activating the isolation element (104) to isolate the converter (300; 400; 500) from the dc network (204) after the formation of the bypass path (110) has driven the current in the isolation element (104) substantially to zero.

14. A method according to any of claims 12 to 13 which further comprises causing at least one capacitor of the converter (300; 400; 500) to absorb energy in a fault condition, and further using the inductive energy thereby stored therewithin to operate switches within the converter (300; 400; 500) and/or the breaker circuit (210).

15. A method according to any of claims 17 to 20 which further comprises providing a connection to an ac network and, following isolation from the dc network (204), operating the converter (300; 400, 500) to provide reactive power compensation within the ac network.

## Patentansprüche

1. Unterbrecherschaltung, die dafür ausgelegt ist, einen Umrichter (300; 400; 500) im Fall eines Störungszustands von einem Gleichstrom(DC)-Netz (204) zu isolieren, wobei die Unterbrecherschaltung Folgendes umfasst:
i. ein Isolationselement (104), das dafür ausgelegt ist, bei Aktivierung einen Stromfluss zwischen dem Gleichstromnetz (204) und dem Umrichter (300; 400; 500) zu verhindern;
ii. ein Energieabsorptionselement (112; 414; 556), das nach Aktivierung des Isolationselements (104) in der Lage ist, in der Schaltung verbleibende Energie aufzunehmen;
iii. eine Kommutierungsspannungsquelle (106; 206; 570), die dafür ausgelegt ist, eine Quelle einer Kommutierungsspannung bereitzustellen, um Strom weg von dem Isolationselement (104) umzuleiten; und
iv. einen schaltbaren Isolationselement-Überbrückungspfad (110), der dafür ausgelegt ist, den umgeleiteten Strom zu empfangen;
wobei der Schutzschalter **dadurch gekennzeichnet ist, dass** mindestens eines von dem Energieabsorptionselement (112; 414; 556), der Kommutierungsspannungsquelle (106; 206; 570) und dem Isolationselement-Überbrückungspfad (110) in einem Nichtstörungszustand betriebsfähig ist, um ein funktionelles Bauelement des Umrichters bereitzustellen.

2. Unterbrecherschaltung nach Anspruch 1, wobei der Überbrückungspfad (110)
(i) mit der Kommutierungsspannungsquelle (106; 206; 570) und dem Energieabsorptionselement (112; 414; 556) parallel geschaltet ist; oder
(ii) ein Kurzschluss zwischen positiven und negativen Gleichstromanschlüssen des Gleichstromnetzes (204) ist;
und/oder wobei der schaltbare Überbrückungspfad (110) eine oder eine Reihe von Halbbrücken- oder Vollbrücken-Kettenverbindungszellen umfasst, die in einen Überbrückungszustand schaltbar sind.

3. Unterbrecherschaltung nach einem der vorhergehenden Ansprüche, wobei die Kommutierungsspannungsquelle (106; 206; 570):
(i) dafür ausgelegt ist, in einem Nichtstörungszustand als ein Filter des Umrichters (300; 400; 500) zu wirken; und/oder
(ii) eine Reihe von Halbbrücken- oder Vollbrücken-Kettenverbindungszellen umfasst, die jeweils einen Zellenkondensator (408) umfassen, wobei die Kettenverbindungszellen steuerbar sind, um ihre Zellenkondensatoren (408) in Reihe einzufügen, um eine Gleichspannungsquelle zu bilden.

4. Unterbrecherschaltungsumrichter nach einem der vorhergehenden Ansprüche, wobei das Energieabsorptionselement (112; 414; 556) mindestens einen Kondensator (408) umfasst.

5. Unterbrecherschaltung nach Anspruch 4, wobei induktive Energie, die im Fall einer Störung von Kondensator(en) (408) absorbiert wird, verwendet wird, um einen oder mehrere Schalter zu schalten, wobei optional mindestens ein solcher Schalter ein Schalter innerhalb des schaltbaren Überbrückungspfads (110) ist.

6. Unterbrecherschaltung nach einem der vorhergehenden Ansprüche, wobei der Umrichter (300; 400; 500) mindestens einer der Folgenden ist: (i) ein modularer Multilevel-Umrichter (MMC), (ii) ein in Reihe geschalteter Brückenumrichter (SBC), (iii) eine geregelte Übergangsbrücke (CTB); und/oder wobei die Unterbrecherschaltung mindestens eine Gleichstrom-Spannungsquelle umfasst, die dafür ausgelegt ist, eine Kommutierungsspannung in der Unterbrecherschaltung zu begrenzen.

7. Umrichter (300; 400; 500), der betriebsmäßig mit einem Isolationselement (104) verbunden ist, das dafür ausgelegt ist, bei Aktivierung einen Stromfluss zwischen einem Gleichstromnetz (204) und dem Umrichter (300; 400; 500) zu verhindern, wobei der Umrichter (300; 400; 500) **dadurch gekennzeichnet ist, dass** er eine Steuerung (208; 560) umfasst, die dafür ausgelegt ist, den Umrichter (300; 400; 500) in einem Nichtstörungszustand und in einem Störungszustand zu betreiben, wobei der Umrichter (300; 400; 500) mindestens ein Bauelement umfasst, das in Nichtstörungszuständen als ein funktionelles Bauelement des Umrichters (300; 400; 500) betreibbar ist und das, in einem Störungszustand, mindestens eines der Folgenden bereitstellt:
(i) ein Energieabsorptionselement (112; 414; 556) zum Empfangen von in der Schaltung verbleibender Energie nach Aktivierung des Isolationselements (104);
(ii) eine Kommutierungsspannungsquelle (106; 206; 570) zum Bereitstellen einer Quelle einer Kommutierungsspannung, um Strom weg von dem Isolationselement (104) umzuleiten;
(iii) einen schaltbaren Isolationselement-Überbrückungspfad (110), zum Empfangen von umgeleitetem Strom.

8. Umrichter nach Anspruch 7, der mindestens einen Filter umfasst, der durch die Steuerung steuerbar ist, um in einem Störungszustand eine Kommutierungsspannungsquelle bereitzustellen.

9. Umrichter (300; 400; 500) nach Anspruch 7 oder 8, der eine oder mehrere Reihen von Kettenverbindungszellen umfasst, die in einem Nichtstörungszustand so wirken, dass sie Spannungswellenformen synthetisieren, und die durch die Steuerung (208) steuerbar sind, um mindestens eines der Folgendes bereitzustellen:
i. den Überbrückungspfad (110);
ii. das Energieabsorptionselement (112; 414; 556) durch Verwendung von Kondensatoren im Inneren der Zellen;
iii. eine Gleichstrom-Spannungsquelle, die dafür ausgelegt ist, eine Kommutierungsspannung zu begrenzen.

10. Umrichter (300; 400; 500) nach einem der Ansprüche 7 bis 9, der dafür ausgelegt ist, sich bei Betrieb mit einem Wechselstromnetz zu verbinden, und ferner dafür ausgelegt ist, nach Isolation von dem Gleichstromnetz (204) mit dem Wechselstromnetz verbunden zu bleiben, und wobei die Steuerung in der Lage ist, den Umrichter (300; 400; 500) zu steuern, um zu den Blindleistungsanforderungen des Wechselstromnetzes beizutragen.

11. Umrichter (300; 400; 500) nach einem der Ansprüche 7 bis 10, der Transformatorwicklungen (546) umfasst, die eine Verbindung mit einem Wechselstrom(AC)-Netz über Wechselstromanschlüsse bereitstellen, und wobei der Umrichter ferner dafür ausgelegt ist, im Fall einer Störung einen Wechselstrom-Überbrückungspfad über die Wechselstromanschlüsse der Transformatorwicklungen zu erzeugen.

12. Verfahren zur Steuerung eines Umrichters (300; 400; 500), wobei das Verfahren ein Bereitstellen eines Umrichters (300; 400; 500) und einer Unterbrecherschaltung, die ein Isolationselement (104) umfasst, umfasst, wobei das Verfahren **dadurch gekennzeichnet ist, dass** es ein Isolieren des Umrichters (300; 400; 500) von einem Gleichstromnetz (204) durch Bewirken, dass der Umrichter (300; 400; 500) von einem Betrieb in einem Nichtstörungszustand in einen Störungszustand wechselt, ein Umleiten von Strom von dem Isolationselement und ein Aktivieren des Isolationselements (104) umfasst, wobei der Schritt des Wechselns von einen Nichtstörungszustand in einen Störungszustand umfasst, dass das mindestens eine funktionale Bauelement des Umrichters (300; 400; 500) dazu gebracht wird, eine der folgenden Funktionen durchzuführen:
i. Bereitstellen einer Kommutierungsspannung, um Spannung weg von dem Isolationselement (104) umzuleiten;
ii. Bereitstellen eines Isolationselement-Überbrückungspfads (110), der dafür ausgelegt ist, umgeleiteten Strom zu empfangen;
iii. Absorbieren von Energie, die in der Umrichterschaltung nach Aktivierung des Isolationselements (104) verbleibt.

13. Verfahren nach Anspruch 12, das ein Bereitstellen einer Kommutierungsspannung im Wesentlichen gleichzeitig mit dem Bereitstellen eines Isolationselement-Überbrückungspfads (110) und, optional, Aktivieren des Isolationselements (104), um den Umrichter (300; 400; 500) von dem Gleichstromnetz (204) zu isolieren, nachdem die Bildung des Überbrückungspfads (110) den Strom in dem Isolationselement (104) im Wesentlichen auf Null gebracht hat, umfasst.

14. Verfahren nach einem der Ansprüche 12 bis 13, das ferner Bewirken, dass mindestens ein Kondensator des Umrichters (300; 400; 500) Energie in einem Störungszustand absorbiert, und ferner Verwenden der induktiven Energie, die dadurch darin gespeichert wird, um Schalter innerhalb des Kondensators (300; 400; 500) und/oder der Unterbrecherschaltung (210) zu bedienen, umfasst.

15. Verfahren nach einem der Ansprüche 17 bis 20, das ferner Bereitstellen einer Verbindung mit einem Wechselstromnetz und, nach Isolierung von dem Gleichstromnetz (204), Betreiben des Umrichters (300; 400; 500), um Blindleistungskompensation innerhalb des Wechselstromnetzes bereitzustellen, umfasst.

## Revendications

1. Disjoncteur agencé pour isoler un convertisseur (300; 400; 500) d'un réseau (204) de courant continu (cc) en cas de condition de défaillance, le disjoncteur comprenant:
i. un élément d'isolation (104) agencé, après activation, pour empêcher la circulation de courant entre le réseau cc (204) et le convertisseur (300 ; 400 ; 500) ;
ii. un élément d'absorption d'énergie (112, 414, 556), capable de recevoir de l'énergie restant dans le circuit à la suite de l'activation de l'élément d'isolation (104) ;
iii. une source de tension de commutation (106 ; 206 ; 570), agencée pour fournir une source de tension de commutation pour détourner du courant de l'élément d'isolation (104) ; et
iv. un chemin de dérivation d'élément d'isolation commutable (110) agencé pour recevoir le courant détourné ;
le disjoncteur est **caractérisé en ce que**
au moins un parmi l'élément d'absorption d'énergie (112 ; 414 ; 556), la source de tension de commutation (106; 206; 570) et le chemin de dérivation de l'élément d'isolation (110) est actionnable dans une condition de non-défaillance pour fournir un composant fonctionnel du convertisseur.

2. Disjoncteur selon la revendication 1, dans lequel le chemin de dérivation (110) est
(i) en parallèle avec la source de tension de commutation (106; 206; 570) et l'élément d'absorption d'énergie (112, 414, 556) ; ou
(ii) un court-circuit entre des bornes cc positive et négative du réseau cc (204); et/ou le chemin de dérivation commutable (110) comprend une ou une série de cellules maillées demi-pont ou pont complet qui sont commutables dans un état de dérivation.

3. Disjoncteur selon l'une quelconque des revendications précédentes, dans lequel la source de tension de commutation (106 ; 206 ; 570) :
(i) est agencée pour agir comme un filtre du convertisseur (300 ; 400 ; 500) dans une condition de non-défaillance; et/ou
(ii) comprend une série de cellules maillées demi-pont ou pont complet, chacune comprenant un condensateur cellulaire (408), dans lequel les cellules maillées peuvent être commandées pour insérer leurs condensateurs cellulaires (408) en série pour former une source de tension directe.

4. Convertisseur de disjoncteur selon l'une quelconque des revendications précédentes, dans lequel l'élément d'absorption d'énergie (112; 414; 556) comprend au moins un condensateur (408).

5. Disjoncteur selon la revendication 4, dans lequel l'énergie inductive absorbée par le(s) condensateur(s) (408) en cas de défaillance est utilisée pour commuter un ou plusieurs interrupteurs, et facultativement au moins un tel interrupteur est un interrupteur à l'intérieur du chemin de dérivation commutable (110).

6. Disjoncteur selon l'une quelconque des revendications précédentes, dans lequel le convertisseur (300 ; 400 ; 500) est au moins un parmi : (i) un convertisseur modulaire multi-niveau (MMC), (ii) un Convertisseur Pont Série (SBC), (iii) un Pont à Transition Contrôlée (CTB) ; et/ou le disjoncteur comprend au moins une source de tension cc agencée pour limiter une tension de commutation dans le disjoncteur.

7. Convertisseur (300; 400; 500) relié de manière fonctionnelle à un élément d'isolation (104) agencé, après activation, pour empêcher la circulation de courant entre un réseau cc (204) et le convertisseur (300 ; 400 ; 500) ; dans lequel le convertisseur (300 ; 400 ; 500) est **caractérisé en ce qu'**il comprend un dispositif de commande (208 ; 560) agencé pour faire fonctionner le convertisseur (300 ; 400 ; 500) dans une condition de non-défaillance et dans une condition de défaillance, le convertisseur (300; 400; 500) comprenant au moins un composant pouvant fonctionner comme un composant fonctionnel du convertisseur (300 ; 400 ; 500) dans des conditions de non-défaillance qui, dans une condition de défaillance, fournit au moins un parmi les suivants :
i. un élément d'absorption d'énergie (112 ; 414 ; 556), pour recevoir de l'énergie restant dans le circuit à la suite de l'activation de l'élément d'isolation (104) ;
ii. une source de tension de commutation (106; 206; 570) pour fournir une source de tension de commutation pour détourner du courant de l'élément d'isolation (104) ;
iii. un chemin de dérivation d'élément d'isolation commutable (110) pour recevoir du courant détourné.

8. Convertisseur selon la revendication 7, qui comprend au moins un filtre, qui peut être commandé par le dispositif de commande pour fournir une source de tension de commutation dans une condition de défaillance.

9. Convertisseur (300; 400; 500) selon la revendication 7 ou 8, qui comprend une ou plusieurs séries de cellules maillées qui agissent dans une condition de non-défaillance pour synthétiser les formes d'onde de tension, et qui peuvent être commandées par le dispositif de commande (208) pour fournir au moins un parmi:
i. le chemin de dérivation (110),
ii. l'élément d'absorption d'énergie (112; 414; 556) par l'utilisation de condensateurs internes aux cellules;
iii. une source de tension cc agencée pour limiter une tension de commutation.

10. Convertisseur (300; 400; 500) selon l'une quelconque des revendications 7 à 9, qui est agencé, en fonctionnement, pour relier un réseau ca et est agencé en outre, après isolation par rapport au réseau cc (204), pour rester relié au réseau ca, et le dispositif de commande est capable de commander le convertisseur (300; 400; 500) afin qu'il contribue aux besoins en puissance réactive du réseau ca.

11. Convertisseur (300 ; 400 ; 500) selon l'une quelconque des revendications 7 à 10, qui comprend des enroulements de transformateur (546) assurant une liaison avec un réseau de courant alternatif (ca) via des bornes ca et dans lequel le convertisseur est agencé en outre, en cas de défaillance, pour créer un chemin de dérivation de courant ca à travers les bornes ca des enroulements de transformateur.

12. Procédé de commande d'un convertisseur (300; 400; 500), le procédé comprenant la fourniture d'un convertisseur (300 ; 400 ; 500) et d'un disjoncteur comprenant un élément d'isolation (104), dans lequel le procédé est **caractérisé en ce qu'**il comprend l'isolation du convertisseur (300; 400; 500) d'un réseau cc (204), en faisant en sorte que le convertisseur (300; 400; 500) passe d'un fonctionnement dans une condition de non-défaillance à une condition de défaillance, le détournement de courant de l'élément d'isolation et l'activation de l'élément d'isolation (104), dans lequel l'étape de passage d'une condition de non-défaillance à une condition de défaillance comprend le fait de faire en sorte qu'au moins un composant fonctionnel du convertisseur (300 ; 400 ; 500) réalise au moins une des fonctions suivantes :
i. fournir une tension de commutation pour détourner du courant de l'élément d'isolation (104) ;
ii. fournir un chemin de dérivation d'élément d'isolation (110) agencé pour recevoir du courant détourné ;
iii. absorber de l'énergie restant dans l'ensemble de circuits de convertisseur à la suite de l'activation de l'élément d'isolation (104).

13. Procédé selon la revendication 12 qui comprend la fourniture d'une tension de commutation sensiblement simultanément à la fourniture d'un chemin de dérivation d'élément d'isolation (110) et, facultativement,
l'activation de l'élément d'isolation (104) pour isoler le convertisseur (300; 400; 500) du réseau cc (204) après que la formation du chemin de dérivation (110) a amené le courant dans l'élément d'isolation (104) sensiblement à zéro.

14. Procédé selon l'une quelconque des revendications 12 à 13, qui comprend en outre le fait de faire en sorte qu'au moins un condensateur du convertisseur (300 ; 400 ; 500) absorbe de l'énergie dans une condition de défaillance, et en outre l'utilisation de l'énergie inductive ainsi stockée à l'intérieur pour faire fonctionner des interrupteurs à l'intérieur du convertisseur (300 ; 400 ; 500) et/ou du disjoncteur (210).

15. Procédé selon l'une quelconque des revendications 17 à 20, qui comprend en outre la fourniture d'une liaison avec un réseau ca et, suite à l'isolation par rapport au réseau cc (204), l'actionnement du convertisseur (300; 400, 500) pour fournir une compensation de puissance réactive à l'intérieur du réseau ca.
